# EUROPEAN PATENT SPECIFICATION

(11) **EP 1 651 425 B1**
(45) Date of publication and mention of the grant of the patent: **24.01.2007**
(21) Application number: 03817750.7
(22) Date of filing: 30.07.2003
(51) Int. Cl.: B29D 30/20, B29D 30/36

(54) **METHOD AND APPARATUS FOR PRODUCING TYRES FOR VEHICLE WHEELS**
VERFAHREN UND VORRICHTUNG ZUR HERSTELLUNG VON REIFEN FÜR FAHRZEUGRÄDER
PROCEDE ET APPAREIL POUR LA PRODUCTION DE PNEUMATIQUES POUR ROUES DE VEHICULES

(43) Date of publication of application: 03.05.2006
(73) Proprietor: Pirelli Tyre S.p.A., 20126 Milano (IT)
(72) Inventor: LACAGNINA, Claudio, c/o Pirelli Pneumatici S.p.A., IT-20126 Milano (IT); DE GESE, Ignazio, c/o Pirelli Pneumatici S.p.A., IT-20126 Milano (IT)
(74) Representative: Tansini, Elio Fabrizio
(86) International application number: PCT/IT2003/000478
(87) International publication number: WO 2005/011967

(56) References cited:
- EP-A- 1 106 335
- WO-A-02/094545
- US-A- 4 805 872
- US-A- 5 354 404

## Description

The present invention relates to a method of producing tyres for vehicle wheels, and to an apparatus for vehicle-tyre production to be used for carrying out said method.

A tyre for vehicle wheels generally comprises a carcass structure including at least one carcass ply having respectively opposite end flaps turned up around annular anchoring structures, each usually formed of a substantially circumferential annular insert onto which at least one filling insert is applied, at a radially external position.

Associated with the carcass structure is a belt structure comprising one or more belt layers placed in radial overlapped relationship with respect to each other and to the carcass ply and having textile or metallic reinforcing cords of a crossed orientation and/or an orientation substantially parallel to the circumferential extension direction of the tyre. At a radially external position to the belt structure, a tread band is applied which is made of elastomeric material like other semi-finished products constituting the tyre itself.

It is to be pointed out here that within the present specification and in the subsequent claims by the term "elastomeric material" it is intended a composition comprising at least one elastomeric polymer and at least one reinforcing filler. Preferably this composition further comprises additives such as a cross-linking and/or plasticizing agent, for example. Due to the presence of the cross-linking agent, this material can be cross-linked through heating so as to form the final article of manufacture. In addition, respective sidewalls of elastomeric material, each extending from one of the side edges of the tread band until close to the respective annular anchoring structure to the beads, are applied to the side surfaces of the carcass structure, which sidewalls depending on the different embodiments, may have respective radially external end edges superposed on the side edges of the tread band so as to form a design scheme of the type usually referred to as "overlying sidewalls", or interposed between the carcass structure and the side edges of the tread band itself, in accordance with a design scheme of the type referred to as "underlying sidewalls".

As shown in documents US 3,990,931 and EP 0 613 767 for example, in most of the known processes for building a tyre the carcass structure and belt structure, together with the respective tread band, are provided to be made separately of each other in respective work stations, to be mutually assembled later on.

In the traditional building methods illustrated in the previously mentioned documents, the tread band is usually made of a continuously-extruded section member that, after being cooled to stabilise its geometrical conformation, is stored on appropriate tables or reels. The semifinished product in the form of sections or of a continuous strip is then sent to a feeding unit the task of which is either to pick up the cut sections or to cut sections of predetermined length from the continuous strip, each of them constituting the tread band to be circumferentially applied to the belt structure of a tyre being processed.

Document EP 1 211 057 A2 discloses a method of producing a tyre wherein during formation of a green tyre, at least one constituent element such as a sidewall is formed by shaping a central portion of a substantially cylindrical carcass structure radially outwardly and subsequently winding up an unvulcanized rubber strip joining it to an outer peripheral surface of the shaped carcass structure.

Document EP 1 201 414 A2 discloses a method of producing a tyre comprising: assembling unvulcanized rubber components to form a green tyre, vulcanizing the green tyre and winding an unvulcanized rubber ribbon in such a manner that windings as a whole will have a predetermined shape in cross-section for at least one of the unvulcanized rubber components to thereby form at least one of said components of unvulcanized rubber. In the production contexts to which the present invention addresses and involving production and storage of semifinished products and subsequent assembling of same on a building and/or shaping drum, production of the tread bands and sidewalls presently calls for installation of a drawing equipment that, to be able to supply appropriate advantages in terms of large-scale economy, must necessarily have a high productivity.

Document WO 02/094545 - A1 discloses a method of manufacturing tyres and an apparatus therefor, wherein a unistage building drum is used, the drum comprising two coaxial half-drums which are movable with respect to each other along an axis between a parted rest position and a closed shaping position.

Document US 4805872 - A discloses a method of manufacturing tyres and an apparatus therefor, wherein a plurality of bladderless shaping drums is used, each drum comprising one bead mounting member which is axially movable towards the second bead mounting member fixed to the extension shaft of the drum.

The Applicant realized the possibility of achieving important improvements in terms of production flexibility and quality of the product, in the present processes of tyre building through assembling of semi-finished components, by producing the tread band and/or sidewalls through winding of a continuous elongated element into circumferential coils directly on a green tyre under production and shaped in a substantially toroidal conformation. In more detail, the Applicant thought of resorting to use of a robotized apparatus to support a drum carrying the carcass structure so as to lead said structure to interact with the units intended for application of the belt structure and formation of the tread band, sidewalls and/or other inserts or structural components provided in the tyre assembling process. Note that this drum can be a building and shaping drum i.e. a so-called "unistage" drum in which the carcass structure is built directly on it and subsequently shaped for association of same with a belt structure. Alternatively, said drum can be a shaping drum also referred as "second-stage drum" on which a carcass structure previously made in the form of a cylindrical sleeve is shaped into a toroidal conformation for association with a belt structure.

The Applicant felt the requirement and possibility of lightening and simplifying the structure of said drum, in particular to make it specifically suitable for an automated control of the movements such as those executed through a robotized apparatus, for example.

The Applicant in fact could verify that the structural complexity, weights and overall dimensions of the presently used drums are not very compatible with control of the latter by a robotized apparatus.

More specifically, in said drums for carrying out the shaping step necessary to associate the belt structure with the carcass structure, an axial and substantially symmetric movement of the two halves of which the drums are made is required, which movement is only obtainable by means of a heavy and complicated mechanical structure that hardly adapts itself to the above discussed movement control, due to its overall dimensions. In accordance with the present invention, the Applicant realized the possibility of overcoming the above described problems by arranging a building apparatus in which the proximal drum half is rigidly fixed with respect to a movable support structure, whereas the distal drum half is set to carry out a relative double stroke as compared with that carried out by the proximal half.

In accordance with a first aspect, the invention comprises a method of producing tyres for vehicle wheels comprising the steps of: disposing a carcass structure having the shape of a cylindrical sleeve on a drum consisting of a distal half and a proximal half both carried by a support structure; disposing a belt structure coaxially around the carcass structure; moving the proximal and distal halves mutually close, from a building condition to a shaping condition, to cause a radial expansion of an intermediate portion of the carcass structure until bringing said intermediate portion into contact with an inner surface of the belt structure, in which during mutual moving close of the proximal and distal halves, the proximal half keeps a fixed axial positioning with respect to the support structure; transferring said drum in the shaping condition in front of at least one unit for application of at least one elongated element of elastomeric material in the form of circumferential coils, which unit is adapted to form at least one component of said tyre at a position radially external to said belt structure or axially external to said carcass structure.

It was found in fact that an important lightening and structural simplification of said drum can thus be achieved, making mounting of same on a robotized apparatus easier. The typical mobility of a robotized apparatus comprising at least one robotized arm for example, can possibly be utilised to keep the middle plane between the halves steady, and consequently also the carcass structure relative to the belt structure, on mutual moving of the halves themselves close to each other during the shaping step. Alternatively, the relative movements between the belt structure and carcass structure can be cancelled by moving the belt structure to the proximal drum half, while the distal drum half is moved towards the proximal half itself.

In a further aspect, the invention relates to an apparatus for producing tyres for vehicle wheels, comprising: a drum having a distal half and a proximal half both carried by a support structure; transfer devices to dispose a belt structure coaxially around a carcass structure set on the drum in the form of a cylindrical sleeve; translation devices to move the proximal and distal halves close to each other from a building condition to a shaping condition; at least one unit for application of an elongated element of elastomeric material, set to interact with said drum so as to obtain laying of said elongated element in circumferential coils externally of the carcass structure, to make at least one component of said tyre; wherein the proximal half.is axially fixed with respect to the support structure.

Further features and advantages will become more apparent from the detailed description of a preferred but not exclusive embodiment of a method and an apparatus for producing tyres for vehicle wheels, in accordance with the present invention.

This description will be set out hereinafter with reference to the accompanying drawings, given by way of non-limiting example, in which:
- Fig. 1 is a diagrammatic top view of an apparatus for producing tyres in accordance with the present invention;
- Fig. 2 is an elevation view of a portion of the apparatus in Fig. 1, highlighting the drum in a building condition and while picking up a belt structure;
- Fig. 3 shows the drum seen in Fig. 2 in a shaping condition;
- Figs. 4a, 4b and 4c are comparing diagrams showing angular correction oscillations that can be carried out on the drum in accordance with the present invention;
- Fig. 5 is a diagrammatic plan view of an alternative embodiment of an installation in accordance with the present invention;
- Fig. 6 is a fragmentary diagrammatic cross-section view of a tyre obtainable in accordance with the present invention.

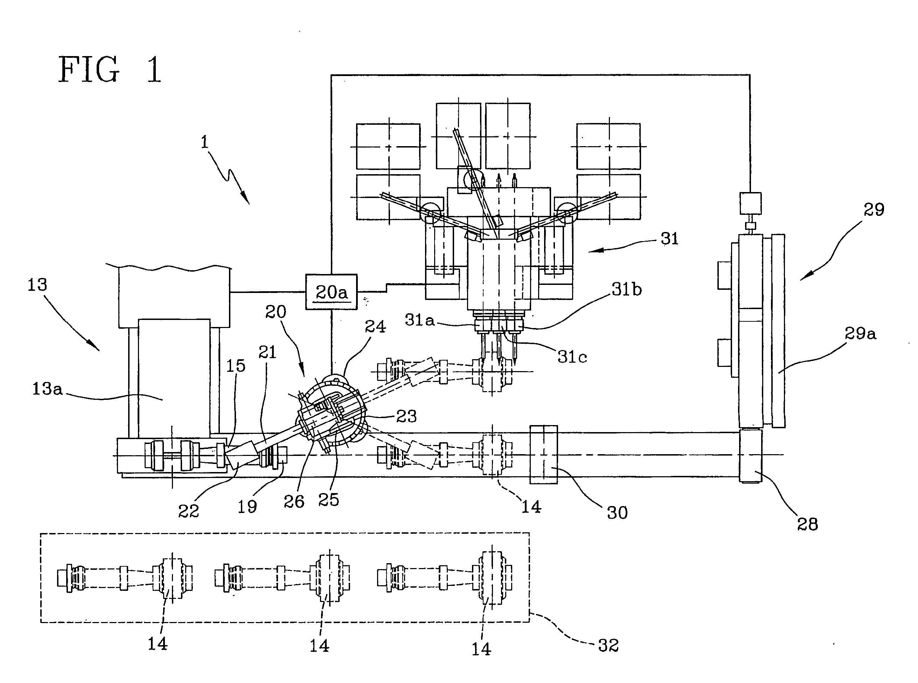

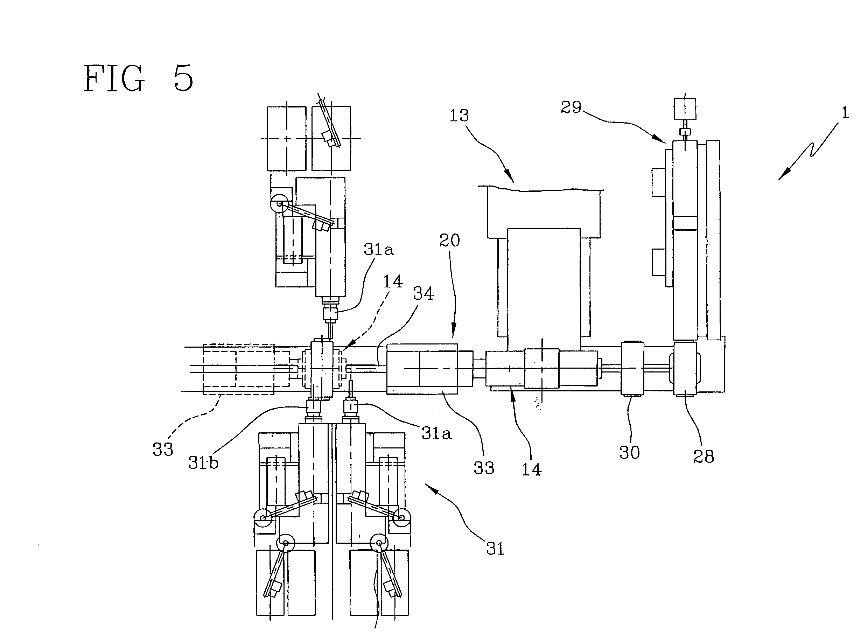

Referring particularly to Figs. 1 and 5, an apparatus for building tyres for vehicle wheels set to put into practice a building method in accordance with the present invention has been generally identified by reference numeral 1.

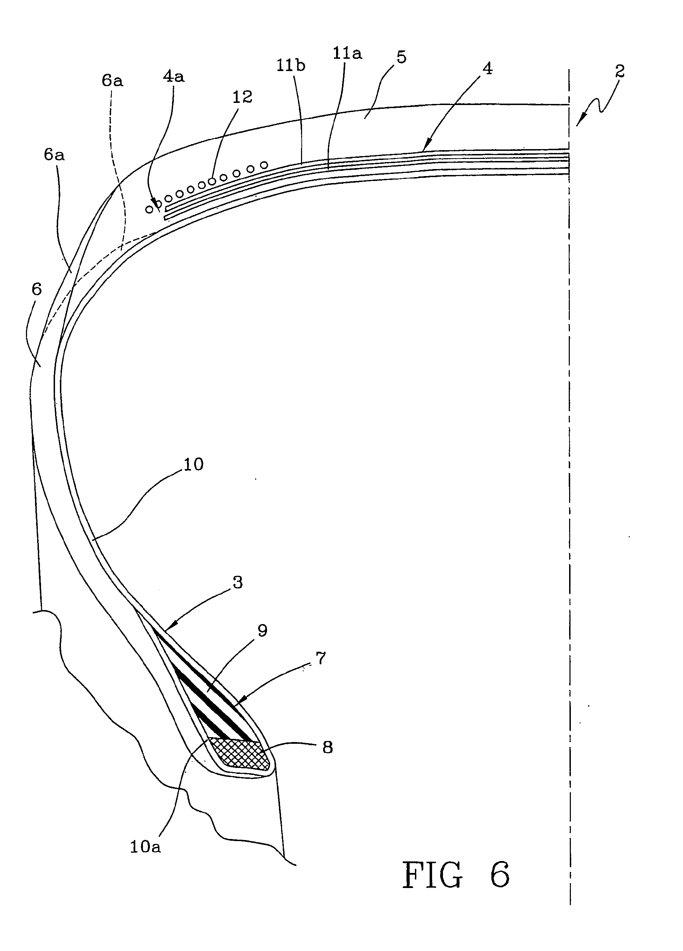

The invention aims at producing tyres of the type generally denoted at 2 in Fig. 6, essentially comprising a carcass structure 3 of substantially toroidal shape, a belt structure 4 of substantially cylindrical shape, circumferentially extending around the carcass structure 3, a tread band 5 applied to the belt structure 4 at a circumferentially external position, and a pair of sidewalls 6 laterally applied to the carcass structure 3 on opposite sides and each extending from a side edge of the tread band until a region close to a radially internal edge of the carcass structure itself.

The carcass structure 3 comprises a pair of annular anchoring structures 7 integrated into regions usually identified as "beads" and each consisting of a substantially circumferential annular insert 8 for example, which is usually referred to as "bead core" and carries an elastomeric filler 9 at a radially external position. Turned up around each of the annular anchoring structures are the end flaps 10a of one or more carcass plies 10 comprising textile or metallic cords extending transversely of the circumferential extension of tyre 2, possibly following a predetermined inclination, from one of the annular anchoring structures 7 to the other.

The belt structure 4 may in turn comprise one or more belt layers 11a, 11b including metallic or textile cords that are suitably inclined to the circumferential extension of the tyre, in respectively crossed orientations between one belt layer and the other, as well as a possible outer belting layer 12 including one or more cords circumferentially wound into coils disposed axially side by side around the belt layers 11a, 11b.

Each of the sidewalls 6 and the tread band 5 essentially comprises at least one layer of elastomeric material of suitable thickness. Also associated with the tread band 5 may be a so-called under-layer (not shown) of elastomeric material of suitable composition and physico-chemical features which acts as an interface between the true tread band and underlying belt structure 4.

The individual components of the carcass structure 3 and belt structure 4, such as in particular the annular anchoring structures 7, carcass plies 10, belt layers 11a, 11b and further possible reinforcements designed to constitute the outer belting layer 12, are supplied to apparatus 1 in the form of semi-finished products made during previous working steps, to be suitably assembled with each other.

Apparatus 1 is provided with a feeding station to supply the carcass structure 3 components, which will be referred to in the following as building station 13 and not described in detail as it can be obtained in any convenient manner, said station being set to operate on a drum 14 to dispose the carcass structure 3 thereon.

Drum 14 could be provided to be of the so-called "second stage" type, i.e. set to engage the carcass structure 3 previously made in the form of a cylindrical sleeve on a so-called "building drum" (not shown) associated with the building station 13. However, in accordance with a preferential embodiment shown in the drawings and described in the following of the present specification, drum 14 is of the so-called "unistage" type, i.e. it is set to support the carcass structure 3 over the whole building process of tyre 2, until the latter is removed from the drum itself to be submitted to a vulcanization step.

With use of a drum 14 of the "unistage" type, the step of setting the carcass structure 3 on the drum is carried out by assembling the components of the carcass structure itself directly on drum 14, at the building station 13. For the purpose, the carcass ply or plies 10 are delivered from a feeding line 13a in the form of sections cut to the appropriate length, in connection with the circumferential extension of drum 14, and wound on said drum to form a so-called "carcass sleeve" which is substantially cylindrical. Alternatively, the carcass ply or plies 10 are first delivered and then cut to size when delivery has been completed. Annular anchoring structures 7 are fitted on the end flaps 10a of plies 10. If required, the building station 13 may comprise devices for associating auxiliary inserts such as reinforcing "lunettes" or others for example, with the carcass ply or plies 10, which inserts are applied during preliminary steps or during steps alternated with those of laying the ply or plies 10 and/or other components of the carcass structure 3.

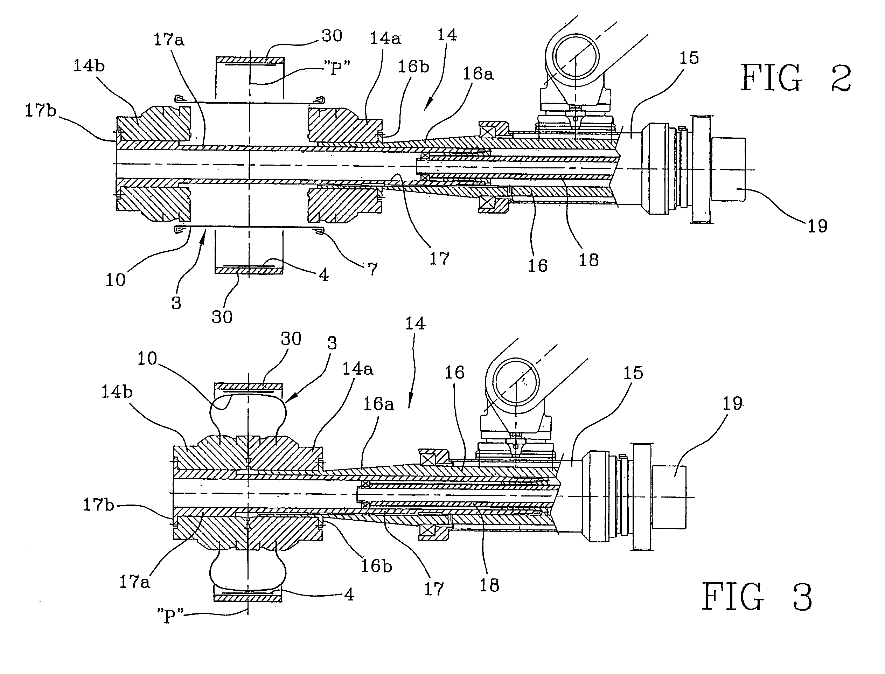

As better viewed from Figs. 2 and 3, drum 14 comprises a support structure 15 having a cylindrical tubular shape, in which a primary shaft 16 is rotatably in engagement, movement of same being restrained in an axial direction. The primary shaft 16 has an end portion 16a projecting from the support structure 15 in cantilevered fashion and it supports an attachment flange 16b to which a proximal half 14a of drum 14 is fastened. The proximal half 14a is therefore secured in an axial direction relative to the support structure 15.

An auxiliary shaft 17 having an end portion 17a jutting out in cantilevered fashion from the end portion 16a of the primary shaft is in axially slidable engagement with the primary shaft 16 while being restrained from moving in a rotational direction. The extremity of the end portion 17a carries a second attachment flange 17b to which a distal half 14b of drum 14, disposed coaxial and in mirror image relationship therewith, is fastened.

In a manner known by itself, each of the proximal and distal halves, 14a, 14b, has movable parts driven by appropriate actuators not shown, either to enable engagement and disengagement of the annular anchoring structures 7 and/or turning up of the end flaps 10a of the carcass plies during building of the tyre, or to receive a previously formed carcass structure.

Also associated with drum 14 are translation devices acting on the auxiliary shaft 17 to cause mutual moving close of the proximal 14a and distal 14b halves. These translation devices, only diagrammatically shown in the drawings as they can be made in any convenient manner, can comprise a ball-bearing screw 18, fluid-operated actuators, or still other means, for example.

The support structure 15 operates on a actuating unit 20 governed by an electronic control unit 20a monitoring operation of apparatus 1 as a whole.

In a preferential embodiment, the actuating unit 20 helps in governing a robotized arm 21 carrying an end head 22 to which drum 14 is fastened, at the support structure 15.

In the example shown, the robotized arm 21 is inserted in the actuating unit 20 comprising a rotatable base 23 set on a fixed platform 24 and rotating around a first vertical axis, a first section 25 linked to the base 23 in an oscillatable manner around a second preferably horizontal axis, a second section 26 linked to the first section 25 in an oscillatable manner around a third axis which is preferably horizontal too. Said robotized arm 31 is rotatably supported by the second section 26 on an axis orthogonal to the third oscillation axis. Head 22 linked to the robotized arm 21, rigidly engages the support structure 15 with possibility of oscillation around a fifth and a sixth oscillation axes orthogonal to each other.

A motor 19 rigidly fixed to the support structure 15 operates on the primary shaft 16 of drum 14, to simultaneously drive the proximal 14a and distal 14b halves in rotation.

Simultaneously with assembling of the carcass structure 3 on drum 14, manufacture of the belt structure is carried out on an auxiliary drum 28. More particularly, to this aim it is provided that the auxiliary drum 28 should interact with a station 29 for application of the belt structure 4 that can for example comprise at least one feeding line 29a along which semi-finished products in the form of a continuous strip are moved forward, said semi-finished products being then cut into sections of a length corresponding to the circumferential extension of the auxiliary drum 28 concurrently with manufacture of the corresponding belt layers 11a, 11b on the same. Combined with the feeding line for the belt layers 29a is a feeding unit for supply of one or more additional reinforcing inserts, such as continuous cords (not shown in the drawings) to be applied upon the belt layers 121a, 11b to form the external belting layer 12 in the form of axially contiguous circumferential coils.

Upon the action of appropriate transfer devices, the belt structure 4 disposed on the auxiliary drum 28 lends itself to be picked up from the latter and transferred onto the carcass structure 3 disposed on drum 14 in the form of a cylindrical sleeve, as shown in Fig. 2. The transfer devices may for example comprise a transfer member 30 of substantially annular shape that is moved until it sets itself around the auxiliary drum 28 to pick up the belt structure 4 therefrom.

In a manner known by itself, the auxiliary drum 28 disengages the belt structure 4 that is then handled by the transfer member 30 to be placed to an appropriate position for engagement with the carcass structure 3. Upon the action of the actuating unit 20, drum 14 is in turn led to interact with the transfer member 30, starting from the position at which the drum itself co-operates with the building station 13, or other devices adapted to engage the carcass structure 3 thereon.

When the belt structure 4, held by the transfer member 30, is disposed around the carcass structure 3, in coaxial relationship therewith, the latter must be shaped in a toroidal configuration, through mutual axial approaching of the annular anchoring structures 7 and simultaneous admission of pressurized fluid to the carcass structure itself, so that an intermediate portion thereof radially expands until bringing the carcass ply or plies 10 into contact with the inner surface of the belt structure 4.

To this aim, the proximal 14a and distal 14b halves are moved close to each other starting from a building condition at which they are axially spaced apart as shown in Fig. 2 to enable formation of the carcass sleeve of cylindrical shape on drum 14, until a shaping condition at which, as shown in Fig. 3, halves 14a, 14b are axially moved close to each other again, to enable radial expansion of the carcass structure 3. Advantageously, mutual approaching of the proximal 14a and distal 14b halves is carried out by causing, upon the action of translation devices 18 associated with drum 14, an axial sliding of the auxiliary shaft 17 and, therefore, of the distal half 14b towards the support structure 15, whereas the proximal half 14a keeps a fixed axial positioning with respect to the support structure itself.

To allow coupling to take place in a correct manner, the movements of the actuating unit 20 and/or the transfer member 30 are such governed by the control unit 20a that mutual contact between the carcass structure 3 and belt structure 4 takes place at a common meridian plane thereof.

To this aim drum 14, in the building condition, is preferably provided to be coaxially inserted into the transfer member 30, preferably until leading the axial middle plane of the carcass structure 3 to coincide with the axial middle plane of the belt structure 4 in the above mentioned common meridian plane, denoted at "P" in Figs. 2 and 3. The control unit 20a therefore governs movements of the actuating unit 20 so as to cause a translation of the support structure 15, and therefore the proximal half 14a, towards the distal half 14b. Simultaneously, upon the action of translation devices 18 governed by the control unit 20a as well, the distal half 14b is axially moved towards the support structure 15 by an amount, expressed in terms of stroke and/or speed, proportional to and preferably corresponding to twice the translation carried out by the support structure itself with respect to an axial middle plane identifiable between halves 14a, 14b and coincident with said common meridian plane "P".

In accordance with a possible alternative embodiment, the control unit 20a may govern movement of the translation devices 18 and the transfer member 30 in such a manner that, starting from an initial reference position at which the axial middle planes of the carcass structure 3 and the belt structure 4 are coincident in the common meridian plane "P, the belt structure 4 is moved to the proximal half 14a and simultaneously, the distal half 14 is moved towards the proximal half 14a itself by an amount, expressed in terms of stroke and/or speed, substantially proportional to and preferably corresponding to twice the translation carried out by the belt structure 4.

A rolling step to be made in any convenient manner can be carried out on the belt structure 4 after the above described shaping step or concurrently therewith, to obtain a better grip of the belt structure 4 against the carcass ply or plies 10.

When engagement has been completed, drum 14 in the shaping condition, together with the carcass 3 and belt 4 structures engaged thereon, is transferred in front of at least one unit 31 for application of at least one elongated element of raw elastomeric material, adapted to make at least one component of said tyre at a position external to the carcass structure 3.

In more detail, the elongated element can be applied in contiguous circumferential coils around a geometric axis of the carcass structure 3, at a position radially external to the belt structure 4 to make the tread band 5 and/or at a position axially external to the carcass structure 3 to make the sidewalls 6.

Preferably, application of the tread band 5 and/or application of the sidewalls 6 are carried out following the above modality, even if the possibility of making the tread band 5 or sidewalls 6 in any other convenient manner is not to be excluded.

The application unit 31 may comprise one or more delivery members 31a, 31b, 31c, each set to lay a respective elongated element of elastomeric material on the carcass structure 3 and/or belt structure 4. Each delivery member 31a, 31b, 31c may for example comprise an extruder, an applicator roller or other member that, when put close to the tyre being processed, lends itself to deliver the respective elongated element directly against the belt structure 4 and/or carcass structure 3 supported by drum 14, simultaneously with winding of the elongated element itself around the geometric axis of the carcass structure 3.

In more detail, a first delivery member 31a can be set to deliver a first elongated element directly against the belt structure 4, to form the tread band 5.

When achievement of the tread band 5 calls for formation of a so-called sub-layer, an auxiliary delivery member 31b can be provided to directly lay an auxiliary elongated element designed to form said under-layer of elastomeric material against the belt structure 4, before intervention of the first delivery member 31a.

Also provided is at least one second delivery member 31c set to deliver a second elongated element directly against the carcass ply 10, simultaneously with rotation of drum 14 allowing winding of the elongated element on the carcass structure 3 supported by said drum 14, at an axially external position.

The actuating unit 20 co-operates with the delivery members 31a, 31b, 31c to define said application unit 31.

Motor 19 in fact operates on drum 14 to drive it in rotation around its geometric axis, so that each of the elongated elements is circumferentially distributed relative to the carcass structure 3. Simultaneously, the actuating unit 20 carries out controlled relative displacements between the drum 14 and the delivery members 31a, 31b, 31c to distribute the elongated element in coils disposed in side by side relationship to form the tread band 5 and/or sidewall 6, in accordance with the desired thickness and geometric-conformation requirements.

The actuating unit 20 therefore lends itself to support drum 14 and guide movement of same during the whole production cycle, being governed by the control unit 20a, which drum is conveniently moved and driven for interaction with the building station 13 and; subsequently, with the parts of apparatus 1 dedicated to carrying out coupling of the belt structure 4 on the carcass structure 3, as well as subsequent formation of the tread band 5 and sidewalls 6.

In more detail the actuating unit 20, after positioning drum 14 in such a manner as to enable engagement of the carcass structure 3 thereon, brings the drum itself to a position coaxial with the transfer member 30 of the belt structure 4. When engagement of the belt structure 4 on the carcass structure 3 has occurred, following shaping of the carcass structure 3 into a toroidal conformation, the actuating unit 20 brings drum 14, by conveniently moving it, in front of the possible auxiliary delivery member 31b designed to make the possible under-layer and, subsequently, in front of the first delivery member 31a, upon the action of which formation of the tread band 5 is completed. Drum 14 is subsequently transferred to the second delivery member 31c and suitably moved in front of the latter to determine formation of one of the sidewalls 6 laterally against the carcass structure 3, just as an indication starting from the annular anchoring structure 7 until close to the corresponding side edge of the previously formed tread band 5. Following overturning of drum 14 in front of the second delivery member 31c, formation of the second sidewall 6 is started on the side of the carcass structure 3 opposite to the previously formed sidewall 6.

The above described operating sequence enables formation of sidewalls 6 having their radially external tailpieces 6a laterally superposed with respect to the side edges of the tread band 5, in accordance with a design scheme of the type usually referred to as "overlying sidewalls".

However, with the same ease, formation of the sidewalls 6 following a design scheme of the type usually called "underlying sidewalls" can be achieved by submitting drum 14 to the action of the second delivery member 31c to determine formation of the sidewalls 6, before bringing it in front of the possible auxiliary delivery member 31b and the first delivery member 31a to form the tread band 5.

During processing, each of the delivery members 31a, 31b, 31c preferably keeps a fixed positioning, while drum 14 is driven in rotation and suitably moved in a vertical direction by the actuating unit 20 in order to determine a convenient distribution of each elongated element so as to form a layer of appropriate shape and thickness over the carcass structure 3 and/or belt structure 4. The continuous elongated element fed from each of the delivery members 31a, 31b, 31c can advantageously have a flattened section, so that it can modulate the thickness of the thus formed elastomeric layer by varying the overlapping degree of the contiguous coils and/or the orientation of the surface of the tyre being worked with respect to the cross-section profile of the elongated element fed from the delivery member itself.

When manufacture of the tread band 5 and sidewalls 6 has been completed, the actuating unit 20 causes a new translation of drum 14 to move it away from the application unit 31 and position it in front of devices (not shown) designed to disengage the built tyre 2 from drum 14. Subsequently, the actuating unit 20 transfers drum 14 again in front of the building station 13 to enable a new carcass structure 3 to be disposed on the drum itself.

Drum 14 may be advantageously provided to be removably engaged with the end portion 22 of the robotized arm 21, to enable easy replacement of same. In addition, a plurality of drums 14 different from each other may be provided to be associated with apparatus 1, said drums being for example arranged in a magazine 32 for individual engagement by the actuating unit 20, to enable processing of tyres having different dimensional and/or structural features for example.

For the purpose, the actuating unit 20 can be set to interact with magazine 32 to lay down therein the drum 14 in engagement with the end head 22 and replace it with a different drum adapted for processing a different type of tyre.

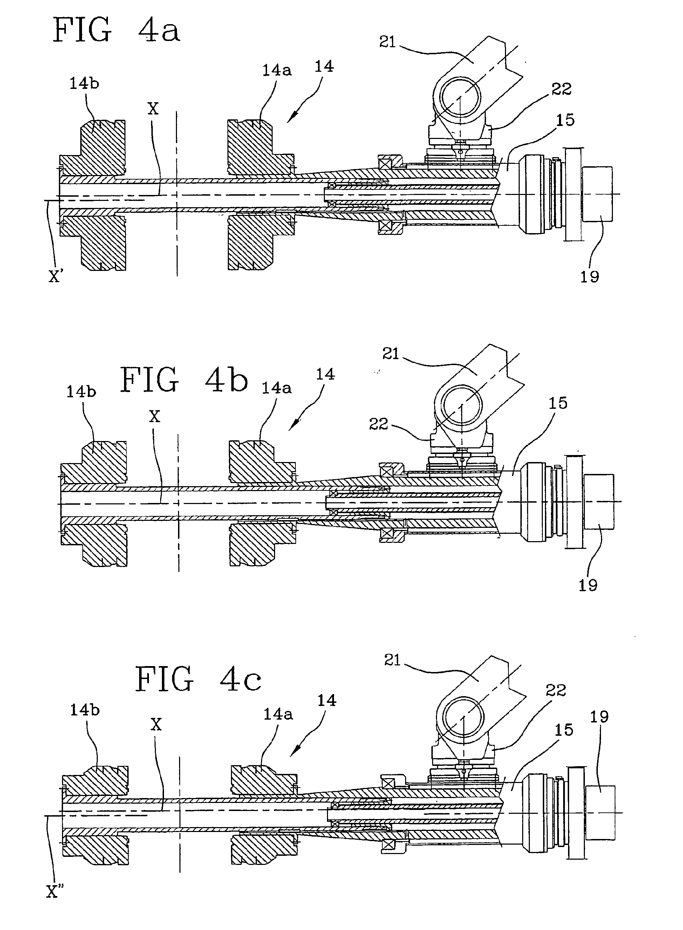

To ensure a perfect interaction of each drum 14 with the building station 13, the transfer member 30 and all the other members of apparatus 1, an angular correction oscillation of drum 14 may be advantageously provided to be carried out in case of need, to give the geometric drum axis a predetermined orientation. Thus, it is possible to correct any occurring misalignments due for example to the difference in weight between a drum 14 designed to process tyres of relatively small sizes (Fig. 4c) and a drum set to process tyres of important tyres (Fig. 4a).

Through comparison of Figs. 4a, 4b and 4c it can be easily understood that drum 14, by means of slight angular movements transmitted through the actuating unit 20, can easily compensate for any deviation exhibited by axis X of drum 14 with respect to a correct angular orientation. In particular, starting from a supposed condition in which the actuating unit 20 maintains the correct angular orientation of a drum 14 of medium sizes, as in Fig. 4b, should this drum be replaced with a drum 14 of greater sizes, as in Fig. 4a, orientation of the geometric axis X of the new drum, by effect of a greater weight, would tend to be deviated downwards to the position denoted at X' in Fig. 4a. This deviation however can be easily corrected by imparting a slight angular correction oscillation to drum 14 in a clockwise direction relative to Fig. 4a, through the actuating unit 20.

Vice versa, when drum 14 is replaced by a drum of smaller sizes, as in Fig. 4c, orientation of the geometric axis X of the new drum, by effect of a smaller weight, would tend to deviate upwardly to the position denoted at X" in Fig. 4c. This deviation is corrected by imparting a slight angular correction oscillation in a counterclockwise direction relative to Fig. 4c to drum 14.

To carry out an angular correction oscillation in an automatic and precise manner, an identification code may be provided to be associated with each drum 14; said code may be stored for example on a small memory unit or may comprise bar codes, mechanical references or others, adapted to be detected by an appropriate system enabling the electronic control unit 20a to recognize the type of drum 14 engaged on said end head 22. Also stored in the control unit 20a can be a series of angular correction values each combined with one of the identification codes of drums 14 provided in apparatus 1. On detection of the identification code of the drum 14 associated with the actuating unit 20, a selection unit associated with the control unit 20a selects the angular correction value combined therewith, in response to which the control unit commands the consequent angular correction oscillation through the actuating unit 20, to give the drum 14 the preestablished orientation.

As an alternative to the above, for control of the angular correction oscillation use of devices for detecting the orientation of drum 14 may be provided, which devices comprise photoelectric cell detectors or others for example, adapted to transmit a signal to the control unit 20a that corresponds to the angular orientation taken by the drum 14 associated with the actuating unit 20. A comparator associated with the control unit 20a compares the detected orientation with a predetermined orientation value, stored in the control unit itself. When the detected orientation value diverges from the predetermined value more than a given tolerance threshold, the control unit 20a commands carrying out of the angular correction oscillation.

In a possible alternative embodiment shown in Fig. 5, the actuating unit 20 comprises a carriage 33 movable along a guide structure 34, between a first position at which, as shown in solid line, it supports drum 14 in front of the building station 13, and a second position at which, as shown in chain line, it supports drum 14 close to the unit 31 for application of the elongated element. In this case the presence of at least two extruders or other delivery members 31c designed to form the sidewalls may be provided, which delivery members are possibly radially and/or transversely movable with respect to the geometric axis of the carcass structure 3 to determine distribution of the respective elongated elements in coils disposed radially in side by side relationship against the opposite sides of the carcass structure 3 under production.

According to a further alternative embodiment, to be adopted in anyone of the above described examples, the delivery member or members 31a, 31b, 31c may be provided to be moved transversely of the circumferential extension of the carcass structure 3 and/or belt structure 4, to determine the transverse distribution of the coils formed with the continuous elongated element.

The present invention achieves important advantages.

Elimination of the mobility of the proximal half 14a of drum 14 in favour of doubling of the stroke performed by the distal half 14b in fact, has allowed achievement of a surprising structural simplification and weight reduction in drum 14, so that it has become suitable for being governed by a robotized apparatus or the like. The invention also utilises the mobility of the actuating unit 20 and/or transfer member 30 of the belt structure 4 to ensure engagement of the carcass structure 3 with the belt structure 4 to an axially centred position, without undesirable misalignment in the assembling operation being caused due to lack of mobility of the proximal half 14a of drum 14.

The invention also enables an easy replacement of the employed drum 14, so that the installation can be instantaneously adapted to the production of tyres having structural features and/or sizes different from each other. This possibility is still more advantageous because it is exploited in combination with formation of the tread band 5 and/or sidewalls 6 by winding of the continuous elongated element supplied from the application unit 31 into contiguous coils, which is readily adaptable to production of tyres of any shape and/or size.

Formation of the tread band 5 and/or sidewalls 6 by winding of a continuous elongated element into coils disposed in side by side relationship also enables overcoming of all the limits of the known art correlated with the requirement of using complicated and bulky machinery for producing tread bands and sidewalls by extrusion, the investment and operating costs of which only justify a large-scale production.

On the contrary, the invention enables the tread band and sidewalls to be produced with much simpler and less bulky machinery, suitable for a production in compliance with the productivity of the individual apparatus 1.

## Claims

1. A method of producing tyres for vehicle wheels, comprising the steps of:
- disposing a carcass structure (3) having the shape of a cylindrical sleeve on a drum (14) consisting of a distal half (14b) and a proximal half (14a) both carried by a support structure (15);
- disposing a belt structure (4) coaxially around the carcass structure (3);
- moving the proximal and distal halves (14a, 14b) mutually close, from a building condition to a shaping condition, to cause a radial expansion of an intermediate portion of the carcass structure (3) until bringing said intermediate portion into contact with an inner surface of the belt structure (4), in which during mutual moving close of the proximal and distal halves (14a, 14b), the proximal half (14a) keeps a fixed axial positioning with respect to the support structure (15);
- transferring said drum (14) in the shaping condition in front of at least one unit (31) for application of at least one elongated element of elastomeric material in the form of circumferential coils, which unit is adapted to form at least one component (5, 6) of said tyre (2) at a position external to said carcass structure (3).

2. A method as claimed in claim 1, wherein mutual approaching of the proximal and distal halves (14a, 14b) involves a translation of the support structure (15) towards the distal half (14b), and a translation of the distal half (14b) towards the support structure (15) by an amount proportional to the translation carried out by the support structure (15) with respect to a median plane (P) between said halves (14a, 14b).

3. A method as claimed in claim 2, wherein translation of the distal half (14b) towards the support structure (15) occurs by an amount corresponding to twice the translation carried out by the support structure (15) with respect to a median plane (P) between said halves (14a, 14b).

4. A method as claimed in claim 1, wherein mutual approaching of the proximal and distal halves (14a, 14b) involves a translation of the belt structure (4) towards the support structure (15), and a translation of the distal half (14b) towards the support structure (15) by an amount proportional to the translation carried out by the belt structure (4) towards the support structure (15).

5. A method as claimed in claim 4, wherein translation of the distal half (14b) towards the support structure (15) takes place by an amount corresponding to twice the translation carried out by the belt structure (4) towards the support structure (15).

6. A method as claimed in claim 2, wherein translation of the support structure (15) is carried out through an actuating unit (20) carrying said support structure (15).

7. A method as claimed in claim 1, further comprising the step of carrying out an angular correction oscillation of the support structure (15) to dispose a geometric axis of the drum (14) in a pre-set orientation, coincident with a geometric axis of the belt structure (4).

8. A method as claimed in claim 7, further comprising the steps of:
- acquiring identification data of the drum (14);
- selecting from a plurality of pre-set angular correction values, a value combined with the detected identification data;
- carrying out the angular correction oscillation in conformity with the selected value depending on the detected identification values.

9. A method as claimed in claim 7, further comprising the steps of:
- detecting the orientation of the geometric axis of the drum (14);
- comparing the detected orientation with the value of the pre-set orientation;
- carrying out the angular correction oscillation when the detected value diverges from the pre-set value more than a predetermined tolerance threshold.

10. A method as claimed in claim 1, wherein said component comprises a tread band (5), application of the elongated element being carried out at a position radially external to the belt structure (4).

11. A method as claimed in claim 1, wherein said at least one component comprises the sidewalls (6), application of the elongated element being carried out at positions axially external to the carcass structure (3).

12. A method as claimed in claim 1, wherein the step of disposing the carcass structure (3) on the drum (14) is carried out through assembling of the components of the carcass structure itself on the drum (14).

13. A method as claimed in claim 1, wherein before disposing the carcass structure (3) on the drum (14), a step of transferring the drum (14) to a feeding station (13) for the components of said carcass structure (3) is carried out.

14. An apparatus for producing tyres for vehicle wheels, comprising:
- a drum having a distal half (14b) and a proximal half (14a) both carried by a support structure (15);
- transfer devices (30) to dispose a belt structure (4) coaxially around a carcass structure (3) set on the drum (14) in the form of a cylindrical sleeve;
- translation devices (18) to move the proximal and distal halves (14a, 14b) close to each other from a building condition to a shaping condition;
- at least one unit (31) for application of an elongated element of elastomeric material, set to interact with said drum (14) so as to obtain laying of said elongated element in circumferential coils externally of the carcass structure (3), to make at least one component (5, 6) of said tyre (2);
wherein the proximal half (14a) is axially fixed with respect to the support structure (15).

15. An apparatus as claimed in claim 14, further comprising:
- an actuating unit (20) carrying the support structure (15) ;
- a control unit (20a) operating on the actuating unit (20) and the translation devices (18), to cause a translation of the support structure (15) towards the distal half (14b), and a simultaneous translation of the distal half (14b) towards the support structure (15) by an amount proportional to the translation carried out by the support structure (15) with respect to a median plane (P) between said halves (14a, 14b).

16. An apparatus as claimed in claim 15, wherein the control unit (20a) is programmed to determine a translation of the distal half (14b) towards the support structure (15) by an amount corresponding to twice the translation carried out by the support structure (15) with respect to a median plane (P) between said halves (14a, 14b).

17. An apparatus as claimed in claim 14, further comprising:
- an actuating unit (20) carrying the support structure (15);
- a control unit (20a) operating on the actuating unit and the translation devices (18), to cause a translation of the belt structure (4) towards the support structure (15), and a simultaneous translation of the distal half (14b) towards the support structure (15) by an amount substantially proportional to the translation carried out by the belt structure (4) towards the support structure (15).

18. An apparatus as claimed in claim 17, wherein the control unit (20a) is programmed to cause translation of the distal half (14b) towards the support structure (15) by an amount corresponding to twice the translation carried out by the belt structure (4) towards the support structure (15).

19. An apparatus as claimed in claim 15 or 17, wherein the actuating unit (20) comprises a robotized arm (21) supporting the drum (14).

20. An apparatus as claimed in claim 19, wherein the drum (14) is removably associated with the robotized arm (21).

21. An apparatus as claimed in claim 18, comprising a plurality of drums (14) different from each other, to be brought individually in engagement with the actuating unit (20).

22. An apparatus as claimed in claim 19, further comprising a control unit (20a) operating on the actuating unit (20) to submit the drum (14) to an angular correction oscillation to dispose a geometric axis of the drum (14) in a pre-set orientation, coincident with the geometric axis of the belt structure (4).

23. An apparatus as claimed in claim 22, wherein said control unit (20a) comprises:
- a memory containing a plurality of angular correction values each combined with the identification' data of a drum (14) associable with the robotized arm (21);
- an acquisition block to acquire the identification data of the drum (14) associated with the robotized arm (21);
- a selecting unit to select from said plurality of angular correction values, the value combined with the detected identification data;
- said control unit (20a) carrying out the angular correction oscillation in response to the value selected from the selecting unit.

24. An apparatus as claimed in claim 22, further comprising:
- a device detecting the orientation of the drum (14);
- a comparator to compare the orientation detected by the control device with the value of the pre-set orientation;
wherein said control unit (20a) carries out the angular correction oscillation when the detected value diverges from the pre-set value more than a predetermined tolerance threshold.

25. An apparatus as claimed in claim 14, further comprising a feeding station (13) to supply the components of said carcass structure (3) set to interact with the drum (14) to form the carcass structure (3) on the drum itself.

## Patentansprüche

1. Verfahren zur Herstellung von Reifen für Fahrzeugräder, welches die Schritte aufweist:
- Anordnen eines Karkassenaufbaus (3), der die Form einer zylindrischen Hülse hat, auf einer Trommel (14), die aus einer distalen Hälfte (14b) und einer proximalen Hälfte (14a) besteht, die beide von einem Halteaufbau (15) getragen werden,
- Anordnen eines Gurtaufbaus (4) koaxial um den Karkassenaufbau (3) herum,
- Bewegen der proximalen und distalen Hälfte (14a, 14b) von einem Aufbauzustand in einen Formzustand nahe aufeinander zu, um eine radiale Aufweitung eines Zwischenabschnitts des Karkassenaufbaus (3) herbeizuführen, bis der Zwischenabschnitt in Kontakt mit einer Innenfläche des Gurtaufbaus (4) gebracht wird, wobei während des nahe aufeinander zu Bewegens der proximalen und distalen Hälfte (14a, 14b) die proximale Hälfte (14a) eine feste axiale Positionierung bezüglich des Halteaufbaus (15) beibehält, und
- Überführen der Trommel im Formzustand vor wenigstens eine Einheit (31) zum Aufbringen wenigstens eines langgestreckten Elements aus elastomerem Material in Form von Umfangswindungen, wobei die Einheit zur Bildung wenigstens eines Bauelements (5, 6) des Reifens (2) in einer Position außerhalb von dem Karkassenaufbau (3) angepasst ist.

2. Verfahren nach Anspruch 1, bei welchem die gegenseitige Annäherung der proximalen und distalen Hälfte (14a, 14b) eine Verschiebung des Halteaufbaus (15) zu der distalen Hälfte (14b) hin sowie eine Verschiebung der distalen Hälfte (14b) zu dem Halteaufbau (15) hin mit einer Größe aufweist, die proportional zu der Verschiebung ist, die von dem Halteaufbau (15) bezüglich einer Mittelebene (P) zwischen den Hälften (14a, 14b) ausgeführt wird.

3. Verfahren nach Anspruch 2, bei welchem die Verschiebung der distalen Hälfte (14b) zu dem Halteaufbau (15) hin mit einer Größe auftritt, die dem Doppelten der Verschiebung entspricht, die von dem Halteaufbau (15) bezüglich einer Mittelebene (P) zwischen den Hälften (14a, 14b) ausgeführt sind.

4. Verfahren nach Anspruch 1, bei welchem die gegenseitige Annäherung der proximalen und distalen Hälfte (14a, 14b) eine Verschiebung des Gurtaufbaus (4) zu dem Halteaufbau (15) hin sowie eine Verschiebung der distalen Hälfte (14b) zu dem Halteaufbau (15) hin mit einer Größe aufweist, die proportional zu der Verschiebung ist, die von dem Gurtaufbau (4) zu dem Halteaufbau (15) hin ausgeführt wird.

5. Verfahren nach Anspruch 4, bei welchem die Verschiebung der distalen Hälfte (14b) zu dem Halteaufbau (15) hin mit einer Größe erfolgt, die dem Doppelten der Verschiebung entspricht, die von dem Gurtaufbau (4) zu dem Halteaufbau (15) hin ausgeführt wird.

6. Verfahren nach Anspruch 2, bei welchem die Verschiebung des Halteaufbaus (15) durch eine Betätigungseinheit (20) ausgeführt wird, die den Halteaufbau (15) trägt.

7. Verfahren nach Anspruch 1, welches weiterhin den Schritt des Ausführens einer Winkelkorrekturverschwenkung des Halteaufbaus (15) aufweist, um eine geometrische Achse der Trommel (14) in einer vorgegebenen Ausrichtung anzuordnen, die mit einer geometrischen Achse des Gurtaufbaus (4) zusammenfällt.

8. Verfahren nach Anspruch 7, welches weiterhin die Schritte aufweist:
- Erfassen von Identifizierungsdaten der Trommel (14),
- Auswählen eines mit den erfassten Identifizierungsdaten kombinierten Wertes aus einer Vielzahl von vorgegebenen Winkelkorrekturwerten, und
- Ausführen der Winkelkorrekturverschwenkung in Übereinstimmung mit dem ausgewählten Wert abhängig von den erfassten Identifizierungswerten.

9. Verfahren nach Anspruch 7, welches weiterhin die Schritte aufweist:
- Erfassen der Ausrichtung der geometrischen Achse der Trommel (14),
- Vergleichen der ausgewählten Ausrichtung mit dem Wert der vorgegebenen Ausrichtung und
- Ausführen der Winkelkorrekturverschwenkung, wenn der erfasste Wert von dem vorgegebenen Wert um mehr als einen vorherbestimmten Toleranzschwellenwert abweicht.

10. Verfahren nach Anspruch 1, bei welchem das Bauelement ein Laufflächenband (5) aufweist, wobei das Aufbringen des langgestreckten Elements an einer Position radial außerhalb des Gurtaufbaus (4) ausgeführt wird.

11. Verfahren nach Anspruch 1, bei welchem das wenigstens eine Bauelement die Seitenwände (6) aufweist, wobei das Aufbringen des langgestreckten Elements an Positionen axial außerhalb des Karkassenaufbaus (3) ausgeführt wird.

12. Verfahren nach Anspruch 1, bei welchem der Schritt des Anordnens des Karkassenaufbaus (3) auf der Trommel (14) während des Zusammenfügens der Bauelemente des Karkassenaufbaus auf der Trommel (14) ausgeführt wird.

13. Verfahren nach Anspruch 1, bei welchem vor dem Anordnen des Karkassenaufbaus (3) auf der Trommel (14) ein Schritt ausgeführt wird, bei welchem die Trommel (14) zu einer Zuführstation (13) für die Bauelemente des Karkassenaufbaus (3) überführt wird.

14. Vorrichtung zum Herstellen von Reifen für Fahrzeugräder, wobei die Vorrichtung
- eine Trommel mit einer distalen Hälfte (14b) und einer proximalen Hälfte (14a), die beide von einem Halteaufbau (15) getragen werden,
- Überführungsvorrichtungen (30) zum Anordnen eines Gurtaufbaus (4) koaxial um einen Karkassenaufbau (3) herum, der auf der Trommel (14) in der Form einer zylindrischen Hülse angeordnet ist,
- Verschiebevorrichtungen (18) zum Bewegen der proximalen und distalen Hälfte (14a, 14b) aus einem Aufbauzustand in einen Formzustand nahe zueinander und
- zum Anbringen eines langgestreckten Elements aus elastomerem Material wenigstens eine Einheit (31) aufweist, die für ein Zusammenwirken mit der Trommel (14) so eingestellt ist, dass das Ablegen des langgestreckten Elements in Umfangswindungen außerhalb des Karkassenaufbaus (3) zur Herstellung wenigstens eines Bauelements (5, 6) des Reifens (2) erreicht wird,
- wobei die proximale Hälfte (14a) bezüglich des Halteaufbaus (15) axial festgelegt ist.

15. Vorrichtung nach Anspruch 14, welche weiterhin
- eine Betätigungseinheit (20), die den Halteaufbau (15) trägt, und
- eine Steuereinheit (20a) aufweist, welche auf die Betätigungseinheit (20) und die Verschiebevorrichtungen (18) so einwirkt, dass eine Verschiebung des Halteaufbaus (15) zur distalen Hälfte (14b) hin und eine gleichzeitige Verschiebung der distalen Hälfte (14b) zu dem Halteaufbau (15) hin mit einer Größe herbeigeführt wird, die proportional zu der Verschiebung ist, die von dem Halteaufbau (15) bezüglich einer Mittelebene (P) zwischen den Hälften (14a, 14b) ausgeführt wird.

16. Vorrichtung nach Anspruch 15, bei welcher die Steuereinheit (20a) so programmiert ist, dass eine Verschiebung der distalen Hälfte (14b) zu dem Halteaufbau (15) mit einer Größe bestimmt wird, die dem Doppelten der Verschiebung entspricht, die von dem Halteaufbau (15) bezüglich einer Mittelebene (P) zwischen den Hälften (14a, 14b) ausgeführt wird.

17. Vorrichtung nach Anspruch 14, welche weiterhin
- eine Betätigungseinheit (20), die den Halteaufbau (15) trägt, und
- eine Steuereinheit (20a) aufweist, die auf die Betätigungseinheit und die Verschiebevorrichtungen (18) so einwirkt, dass eine Verschiebung des Gurtaufbaus (4) zu dem Halteaufbau (15) hin und eine gleichzeitige Verschiebung der distalen Hälfte (14b) zu dem Halteaufbau (15) hin mit einer Größe hergeführt wird, die im Wesentlichen proportional zur Verschiebung ist, die von dem Gurtaufbau (4) zu dem Halteaufbau (15) hin ausgeführt wird.

18. Vorrichtung nach Anspruch 17, bei welcher die Steuereinheit (20a) so programmiert ist, dass sie eine Verschiebung der distalen Hälfte (14b) zu dem Halteaufbau (15) hin mit einer Größe herbeiführt, die dem Doppelten der Verschiebung entspricht, die von dem Gurtaufbau (4) zu dem Halteaufbau (15) hin ausgeführt wird.

19. Vorrichtung nach Anspruch 15 oder 17, bei welcher die Betätigungseinheit (20) einen robotisierten Arm (21) aufweist, der die Trommel (14) trägt.

20. Vorrichtung nach Anspruch 19, bei welcher die Trommel (14) lösbar mit dem robotisierten Arm (21) verbunden ist.

21. Vorrichtung nach Anspruch 18 mit einer Vielzahl von voneinander verschiedenen Trommeln (14) für ein individuelles In-Eingriff-Bringen mit der Betätigungseinheit (20).

22. Vorrichtung nach Anspruch 19, welche weiterhin eine Steuereinheit (20a) aufweist, die auf die Betätigungseinheit (20) so einwirkt, dass die Trommel (14) einer Winkelkorrekturverschwenkung unterworfen wird, um eine geometrische Achse der Trommel (14) in einer vorgegebenen Ausrichtung anzuordnen, die mit der geometrischen Achse des Gurtaufbaus (4) zusammenfällt.

23. Vorrichtung nach Anspruch 22, bei welcher die Steuereinheit (20a)
- einen Speicher, der eine Vielzahl von Winkelkorrekturwerten enthält, von denen jeder mit den Identifizierungsdaten einer Trommel (14) kombiniert ist, die mit dem robotisierten Arm (21) verbindbar ist,
- einen Erfassungsblock zum Erfassen der Identifizierungsdaten der Trommel (14), die mit dem robotisierten Arm (21) verbunden ist, und
- eine Auswähleinheit zum Auswählen des mit den erfassten Identifizierungsdaten kombinierten Werts aus der Vielzahl von Winkelkorrekturwerten aufweist,
- wobei die Steuereinheit (20a) die Winkelkorrekturverschwenkung ansprechend auf den von der Wähleinheit ausgewählten Wert ausführt.

24. Vorrichtung nach Anspruch 22, welche weiterhin
- eine Vorrichtung zum Erfassen der Ausrichtung der Trommel (14) und
- einen Komparator zum Vergleichen der von der Steuervorrichtung erfassten Ausrichtung mit dem Wert der vorgegebenen Ausrichtung aufweist,
- wobei die Steuereinheit (20a) die Winkelkorrekturverschwenkung ausführt, wenn der erfasste Wert von dem vorgegebenen Wert mehr als ein vorgegebener Toleranzschwellenwert abweicht.

25. Vorrichtung nach Anspruch 14, welche weiterhin zum Zuführen der Bauelemente des Karkassenaufbaus (3) eine Zuführstation (13) aufweist, die so eingestellt ist, dass sie mit der Trommel (14) zusammenwirkt, um den Karkassenaufbau (3) auf der Trommel zu bilden.

## Revendications

1. Procédé de fabrication de pneus pour roues de véhicule, comprenant les étapes consistant à :
- disposer une structure de carcasse (3) ayant la forme d'un manchon cylindrique sur un tambour (14) constitué d'une moitié distale (14b) et d'une moitié proximale (14a), toutes deux supportées par une structure de support (15) ;
- disposer une structure de ceinture (4) de façon coaxiale autour de la structure de carcasse (3) ;
- rapprocher étroitement les moitiés proximale et distale (14a, 14b) l'une de l'autre, d'un état de construction à un état de mise en forme, pour provoquer un développement radial d'une partie intermédiaire de la structure de carcasse (3) jusqu'à mettre ladite partie intermédiaire en contact avec une surface intérieure de la structure de ceinture (4), dans laquelle, pendant le rapprochement mutuel des moitiés proximale et distale (14a, 14b), la moitié proximale (14a) maintient un positionnement axial fixe par rapport à la structure de support (15) ;
- transférer ledit tambour (14) dans l'état de mise en forme devant au moins une unité (31) pour l'application d'au moins un élément allongé en matériau élastomère sous la forme de spires périphériques, laquelle unité est adaptée pour former au moins un composant (5, 6) dudit pneu (2) en une position extérieure à ladite structure de carcasse (3).

2. Procédé selon la revendication 1, dans lequel le rapprochement mutuel des moitiés proximale et distale (14a, 14b) implique une translation de la structure de support (15) vers la moitié distale (14b), et une translation de la moitié distale (14b) vers la structure de support (15) d'une quantité proportionnelle à la translation effectuée par la structure de support (15) par rapport à un plan médian (P) entre lesdites moitiés (14a, 14b).

3. Procédé selon la revendication 2, dans lequel la translation de la moitié distale (14b) vers la structure de support (15) se fait selon une quantité correspondant à deux fois la translation effectuée par la structure de support (15) par rapport à un plan médian (P) entre lesdites moitiés (14a, 14b).

4. Procédé selon la revendication 1, dans lequel le rapprochement mutuel des moitiés proximale et distale (14a, 14b) implique une translation de la structure de ceinture (4) vers la structure de support (15), et une translation de la moitié distale (14b) vers la structure de support (15) d'une quantité proportionnelle à la translation effectuée par la structure de ceinture (4) vers la structure de support (15).

5. Procédé selon la revendication 4, dans lequel la translation de la moitié distale (14b) vers la structure de support (15) se fait selon une quantité correspondant à deux fois la translation effectuée par la structure de ceinture (4) vers la structure de support (15).

6. Procédé selon la revendication 2, dans lequel la translation de la structure de support (15) est effectuée par le biais d'une unité d'actionnement (20) qui porte ladite structure de support (15).

7. Procédé selon la revendication 1, comprenant en outre l'étape consistant à effectuer une oscillation de correction angulaire de la structure de support (15) pour mettre un axe géométrique du tambour (14) dans une orientation préétablie, qui coïncide avec un axe géométrique de la structure de ceinture (4).

8. Procédé selon la revendication 7, comprenant en outre les étapes consistant à :
- acquérir des données d'identification du tambour (14) ;
- choisir parmi une pluralité de valeurs de correction angulaire une valeur associée aux données d'identification détectées ;
- exécuter l'oscillation de correction angulaire en conformité avec la valeur choisie dépendant des valeurs d'identification détectées.

9. Procédé selon la revendication 7, comprenant en outre les étapes consistant à :
- détecter l'orientation de l'axe géométrique du tambour (14) ;
- comparer l'orientation détectée avec la valeur de l'orientation préétablie ;
- exécuter l'oscillation de correction angulaire lorsque la valeur détectée diverge de la valeur préétablie de plus d'un seuil de tolérance prédéterminé.

10. Procédé selon la revendication 1, dans lequel ledit composant comprend une bande de roulement (5), l'application de l'élément allongé étant effectuée en une position radialement extérieure à la structure de ceinture (4).

11. Procédé selon la revendication 1, dans lequel ledit au moins un composant comprend les flancs (6), l'application de l'élément allongé étant effectuée en des positions axialement extérieures à la structure de carcasse (3).

12. Procédé selon la revendication 1, dans lequel l'étape de mise en place de la structure de carcasse (3) sur le tambour (14) est exécutée par le biais de l'assemblage des composants de la structure de carcasse sur le tambour (14).

13. Procédé selon la revendication 1, dans lequel avant la mise en place de la structure de carcasse (3) sur le tambour (14), une étape de transfert du tambour (14) vers une station d'alimentation (13) pour les composants de ladite structure de carcasse (3) est exécutée.

14. Dispositif pour la production de pneus pour roues de véhicule, comprenant :
- un tambour ayant une moitié distale (14b) et une moitié proximale (14a), toutes deux supportées par une structure de support (15) ;
- des dispositifs de transfert (30) pour disposer une structure de ceinture (4) de façon coaxiale autour d'une structure de carcasse (3) placée sur le tambour (14) sous la forme d'un manchon cylindrique ;
- des dispositifs de translation (18) pour rapprocher les moitiés proximale et distale (14a, 14b) l'une de l'autre, d'un état de construction à un état de mise en forme ;
- au moins une unité (31) pour l'application d'un élément allongé en matériau élastomère, destiné à interagir avec ledit tambour (14) afin d'obtenir une application dudit élément allongé sous la forme de spires périphériques extérieurement à la structure de carcasse (3), pour former au moins un composant (5, 6) dudit pneu (2) ;
dans lequel la moitié proximale (14a) est fixée axialement par rapport à la structure de support (15).

15. Dispositif selon la revendication 14, comprenant en outre :
- une unité d'actionnement (20) qui porte la structure de support (15) ;
- une unité de commande (20a) agissant sur l'unité d'actionnement (20) et les dispositifs de translation (18), pour provoquer une translation de la structure de support (15) vers la moitié distale (14b), et une translation simultanée de la moitié distale (14b) vers la structure de support (15) d'une quantité proportionnelle à la translation réalisée par la structure de support (15) par rapport à un plan médian (P) entre lesdites moitiés (14a, 14b).

16. Dispositif selon la revendication 15, dans lequel l'unité de commande (20a) est programmée pour déterminer une translation de la moitié distale (14b) vers la structure de support (15) d'une quantité correspondant à deux fois la translation réalisée par la structure de support (15) par rapport à un plan médian (P) entre lesdites moitiés (14a, 14b).

17. Dispositif selon la revendication 14, comprenant en outre :
- une unité d'actionnement (20) qui porte la structure de support (15) ;
- une unité de commande (20a) agissant sur l'unité d'actionnement et les dispositifs de translation (18), pour provoquer une translation de la structure de ceinture (4) vers la structure de support (15), et une translation simultanée de la moitié distale (14b) vers la structure de support (15) d'une quantité substantiellement proportionnelle à la translation réalisée par la structure de ceinture (4) vers la structure de support (15).

18. Dispositif selon la revendication 17, dans lequel l'unité de commande (20a) est programmée pour provoquer une translation de la moitié distale (14b) vers la structure de support (15) d'une quantité correspondant à deux fois la translation réalisée par la structure de ceinture (4) vers la structure de support (15).

19. Dispositif selon la revendication 15 ou 17, dans lequel l'unité d'actionnement (20) comprend un bras robotisé (21) qui supporte le tambour (14).

20. Dispositif selon la revendication 19, dans lequel le tambour (14) est associé de façon amovible au bras robotisé (21).

21. Dispositif selon la revendication 18, comprenant une pluralité de tambours (14) différents les uns des autres, destinés à être mis individuellement au contact de l'unité d'actionnement (20).

22. Dispositif selon la revendication 19, comprenant en outre une unité de commande (20a) agissant sur l'unité d'actionnement (20) pour soumettre le tambour (14) à une oscillation de correction angulaire pour mettre un axe géométrique du tambour (14) dans une orientation préétablie, qui coïncide avec l'axe géométrique de la structure de ceinture (4).

23. Dispositif selon la revendication 22, dans lequel ladite unité de commande (20a) comprend :
- une mémoire contenant une pluralité de valeurs de correction angulaire associées chacune aux données d'identification d'un tambour (14) pouvant être associé au bras robotisé (21) ;
- un bloc d'acquisition pour acquérir les données d'identification du tambour (14) associé au bras robotisé (21) ;
- une unité de sélection pour choisir parmi lesdites valeurs de correction angulaire, la valeur associée aux données d'identification détectées ;
- ladite unité de commande (20a) exécutant l'oscillation de correction angulaire en réponse à la valeur choisie à partir de l'unité de sélection.

24. Dispositif selon la revendication 22, comprenant en outre :
- un dispositif détectant l'orientation du tambour (14) ;
- un comparateur pour comparer l'orientation détectée par le dispositif de commande avec la valeur de l'orientation préétablie ;
dans lequel ladite unité de commande (20a) exécute l'oscillation de correction angulaire lorsque la valeur détectée diverge de la valeur préétablie de plus d'un seuil de tolérance prédéterminé.

25. Dispositif selon la revendication 14, comprenant en outre une station d'alimentation (13) pour amener les composants de ladite structure de carcasse (3) prévus pour interagir avec le tambour (14) pour former la structure de carcasse (3) sur le tambour.
